Europäisches Patentamt

European Patent Office

Office européen des brevets

(11) Numéro de publication: **0 433 169 B1**

(12) **FASCICULE DE BREVET EUROPEEN**

(45) Date de publication de fascicule du brevet: **02.08.95**  (51) Int. Cl.⁶: **B60S  1/38**

(21) Numéro de dépôt: **90403546.6**

(22) Date de dépôt: **12.12.90**

(54) **Dispositif déflecteur pour balai d'essuie-glace.**

(30) Priorité: **14.12.89 FR 8916553**

(43) Date de publication de la demande:
**19.06.91 Bulletin  91/25**

(45) Mention de la délivrance du brevet:
**02.08.95 Bulletin  95/31**

(84) Etats contractants désignés:
**DE ES GB IT**

(56) Documents cités:
DE-U- 8 518 515          FR-A- 2 550 744
FR-A- 2 556 297          FR-A- 2 621 288
GB-A- 2 106 775          GB-A- 2 145 928
GB-A- 2 146 891

(73) Titulaire: **VALEO SYSTEMES D'ESSUYAGE**
**11, rue Faraday**
**F-78180 Montigny-Le-Bretonneux (FR)**

(72) Inventeur: **Roumegoux, Jean-Louis**
**4, rue de Sfax**
**F-75016 Paris (FR)**

(74) Mandataire: **Gamonal, Didier**
**Valeo Management Services**
**Sce Propriété Industrielle**
**2, rue André Boulle**
**B.P. 150**
**F-94004 Créteil (FR)**

Rank Xerox (UK) Business Services
(3. 10/3.0 9/3.3.3)

## Description

L'invention concerne un dispositif déflecteur pour balai d'essuie-glace, en particulier pour véhicule automobile.

Un balai d'essuie-glace comprend classiquement une armature destinée à être portée par un bras d'essuie-glace et une raclette portée par un ensemble de palonniers monté sur des articulations prévues aux extrémités de l'armature.

On sait que l'écoulement de l'air sur une surface à essuyer, par exemple sur le pare-brise d'un véhicule automobile, a tendance à provoquer le soulèvement du ou des balais d'essuie-glace, et cela malgré les moyens de rappel élastique normalement prévus pour appliquer le ou les balais sur la surface à essuyer. Ce phénomène est d'autant plus important que la vitesse du véhicule considéré est élevée.

Pour pallier cet inconvénient, il a été proposé de monter un déflecteur d'air sur le balai ou sur le bras d'essuie-glace pour créer un effet aérodynamique tendant à appliquer le balai contre la surface à essuyer, et cela même à vitesse élevée.

On connaît ainsi, d'après le document FR-A-2621288, un déflecteur pour balai d'essuie-glace porté par un bras d'essuie-glace, du type comportant des moyens d'accrochage au bras ou au balai et une partie profilée de forme globalement convexe tournée à l'opposé des moyens d'accrochage.

Conformément au Brevet français précité, cette partie profilée comporte une première zone sensiblement plane s'étendant depuis un bord avant vers l'arrière, faiblement inclinée par rapport au plan moyen de la surface à essuyer, et une seconde zone faisant suite à la première et limitée par un bord arrière d'inclinaison, par rapport à la surface à essuyer, supérieure à l'inclinaison de la première zone.

Il est également connu par le document FR-A-2 556 297 un dispositif déflecteur pour balai d'essuie-glace porté par un bras d'essuie-glace, du type comportant des moyens d'accrochage au balai et une partie profilée possédant une face interne tournée vers une surface à essuyer et une face externe opposée, lesquelles se rejoignent entre elles le long d'un bord avant et d'un bord arriière, où ladite partie profilée possède une section transversale limitée extérieurement par deux courbes évolutives continues qui engendrent respectivement lesdites faces interne et externe et l'une au moins des deux courbes présente au point d'inflexion situé entre les deux extrémités, le bord avant de la partie profilée étant plus proche de la surface à essuyer que son bord arrière.

On procure ainsi un effet aérodynamique ou "effet de sol" qui tend à attirer le déflecteur en direction de la surface à essuyer et à maintenir ainsi le bras et le balai à une hauteur constante par rapport à cette surface, et cela même à grande vitesse.

La Demanderesse a constaté que cet effet de sol pouvait être obtenu par un déflecteur possédant une partie profilée de section transversale différente.

L'invention concerne plus particulièrement un dispositif déflecteur tel que défini précédemment et qui se caractérise par le fait que les deux courbes présentent deux jonctions communes engendrant respectivement lesdits bords avant et arrière.

Les expressions "bord avant" et "bord arrière" entendent ici désigner les bords de la partie profilée qui sont respectivement le plus éloigné et le plus proche du balai d'essuie-glace.

La section transversale de la partie profilée du dispositif de l'invention est ainsi définie par deux courbes évolutives continues, c'est-à-dire des courbes dont la dérivée, au sens mathématique du terme, varie sans discontinuité. Au contraire, dans le cas du déflecteur du Brevet français précité, il existe une discontinuité due à une variation angulaire brusque entre la première zone et la seconde zone.

L'un des principaux avantages de la partie profilée de l'invention réside dans le fait que ces deux courbes peuvent s'exprimer mathématiquement en fonction de différents coefficients et paramètres liés au système d'essuyage ou au déflecteur. Par conséquent, on peut définir le déflecteur le plus adapté à une configuration donnée, les coefficients étant d'abord définis par le calcul, ensuite définis expérimentalement, puis optimisés par le calcul.

Dans une forme de réalisation préférée de l'invention, les jonctions des deux courbes définissent chacune un point de rebroussement et chacune des deux courbes présente un point d'inflexion.

Dans une autre forme de réalisation, l'une des jonctions des deux courbes présente un point de rebroussement, l'autre jonction a une forme incurvée reliant les deux courbes, et une seule des deux courbes présente un point d'inflexion.

Avantageusement, la partie profilée s'étend sur une longueur au moins égale à la moitié de celle du balai.

Bien que la partie profilée puisse être pleine, il est possible de prévoir au moins une découpe qui la traverse de part en part, et cela pour favoriser l'écoulement de l'air.

Selon une autre caractéristique de l'invention, la partie profilée est formée d'une seule pièce avec les moyens d'accrochage, par exemple par moulage d'une matière plastique.

A titre d'exemple, ces moyens d'accrochage peuvent comporter des pinces propres à s'encliqueter de manière amovible sur l'armature du balai d'essuie-glace.

Dans la description qui suit, donnée seulement à titre d'exemple, on se réfère au dessin annexé sur lequel :

- la figure 1 est une vue en élévation d'un balai d'essuie- glace muni d'un dispositif déflecteur selon l'invention ;
- la figure 2 est une vue en coupe, à plus grande échelle, suivant la ligne II-II de la figure 1 ;
- la figure 3 est un graphique représentant la section transversale de la partie profilée de la figure 2 ; et
- la figure 4 est un graphique représentant la partie profilée en vue de dessus.

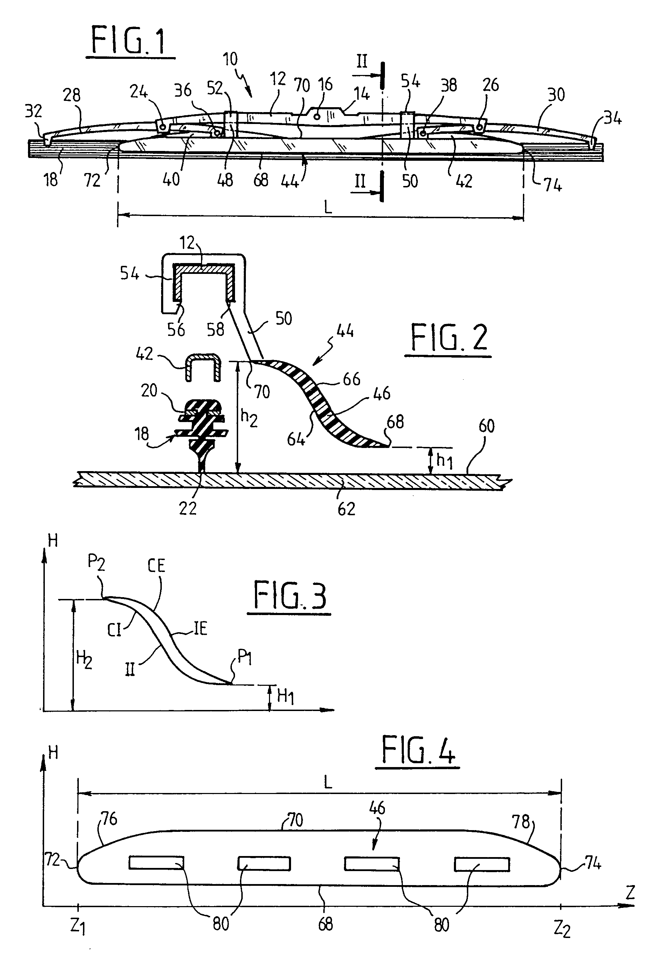

La figure 1 représente un balai d'essuie-glace 10, de construction classique, comprenant une armature 12 à section transversale en forme de U renversé (figure 2). L'armature 12 est destinée à être portée par un bras d'essuie-glace (non représenté). A cet effet, l'armature 12 comporte, dans sa partie médiane, une ouverture 14 pratiquée dans le fond du profilé en U pour le passage d'une extrémité du bras. Un axe transversal 16 s'étend, au niveau de l'ouverture 14, entre les ailes du profilé en U. Cet axe 16 est destiné à être engagé dans un logement de l'extrémité-du bras pour assurer une liaison articulée entre le bras et l'armature 12.

La balai comprend en outre une raclette souple 18, par exemple en matière élastomère, combinée avec une lame métallique flexible 20 (figure 2) prévue du côté éloigné de l'arête d'essuyage 22 de la raclette.

La raclette 18 est portée par un ensemble de palonniers montés sur deux articulations 24 et 26 prévues aux extrémités de l'armature 12. Cet ensemble de palonniers comprend deux palonniers principaux 28 et 30 portés respectivement par les articulations 24 et 26. Ces palonniers sont munis, à une extrémité, d'une griffe 32 respectivement 34 de maintien de la raclette 18. Les palonniers 28 et 30 sont munis, à leur autre extrémité, d'une articulation 36 respectivement 38 servant à porter respectivement deux palonniers secondaires 40 et 42. Ces derniers sont munis chacun, à leurs deux extrémités, de griffes (non visibles sur le dessin) servant au maintien de la raclette. Le balai d'essuie-glace, tel qu'il vient d'être décrit ci-dessus, est d'une structure parfaitement connue en soi.

Conformément à l'invention, le balai 10 est équipé d'un dispositif déflecteur 44 (figures 1 et 2) comprenant une partie profilée 46 reliée par deux pattes de liaison 48 et 50 à des moyens d'accrochage constitués ici par deux pinces 52 et 54 propres à se clipser sur l'armature 12. A cet effet, les pinces 52 et 54 ont une section sensiblement en forme de U renversé propres à coiffer l'armature 12 et à venir s'accrocher sur celle-ci par des saillies 56 et 58 (figure 2).

Comme montré à la figure 2, la raclette 18 est destinée à essuyer une surface 60 d'un pare-brise 62, par exemple de véhicule automobile. La partie profilée 46 possède une face interne 64 tournée vers la surface à essuyer 60 et une face externe opposée 66. Les faces 64 et 66 se rejoignent entre elles, d'une part, le long d'un bord avant 68 et, d'autre part, le long d'un bord arrière 70, le bord avant étant plus éloigné du balai d'essuieglace que le bord arrière.

La partie profilée possède une section transversale limitée extérieurement par deux courbes évolutives continues CI et CE (figure 3) qui engendrent respectivement la face interne 64 et la face externe 66. Les courbes CI et CE présentent deux jonctions communes définissant deux points de rebroussement P1 et P2 qui correspondent respectivement au bord avant 68 et au bord arrière 70 de la partie profilée. Comme montré aux figures 2 et 3, le bord avant 68 (point de rebroussement P1) est à une hauteur H1 de la surface à essuyer 60, tandis que le bord arrière 70 (point de rebroussement P2) est à une hauteur H2 de la surface 60, cette hauteur H2 étant supérieure à H1.

Les courbes C1 et C2 ont, dans l'exemple, sensiblement la même forme et sont chacune des courbes évolutives continues, c'est-à-dire qu'elles présentent une dérivée (au sens mathématique du terme) qui varie de façon continue. Dans l'exemple de réalisation, la courbe CI présente un point d'inflexion II et la courbe CE un point d'inflexion IE.

Compte tenu de leur forme spécifique, les courbes CI et CE peuvent être définies par les formules mathématiques suivantes :

$$CI = \sum_{i=o}^{n} d_i x^i$$

$$CE = \sum_{i=o}^{n} s_i x^i$$

dans lesquelles les coefficients $d_i$ et $s_i$ sont liés aux différents paramètres du système d'essuyage ou du déflecteur :

- rayon de balayage,
- courbure ou galbe du pare-brise,
- vitesse du véhicule,
- profit de la raclette,
- structure du balai,
- hauteur par rapport au pare-brise,
- longueur du balai.

Il est ainsi possible de définir la structure profilée la plus adaptée à une configuration donnée. Les coefficients sont d'abord définis par le calcul, ensuite définis expérimentalement, et enfin optimisés par le calcul.

Comme montré à la figure 1, le dispositif déflecteur 44 s'étend sur une longueur L qui est au moins égale à la moitié de la longueur du balai d'essuie-glace, c'est-à-dire celle de la raclette 18. Dans l'exemple de réalisation, la longueur L est approximativement égale aux deux tiers de la longueur de la raclette, mais cette longueur L pourrait être pratiquement égale à celle de la longueur de la raclette.

La partie profilée 46 présente une section constante sur toute sa longueur, cette section se réduisant progressivement en direction des deux extrémités 72 et 74 de la partie profilée.

Dans l'exemple de réalisation (figure 4), les extrémités 72 et 74 ont une forme arrondie de faible rayon raccordée au bord avant 68. Ces deux extrémités sont ensuite raccordées au bord arrière 70 par deux parties incurvées 76 et 78 de rayon beaucoup plus élevé.

Par ailleurs, comme montré à la figure 4, il est prévu, dans l'épaisseur de la partie profilée, quatre découpes 80, de forme générale rectangulaire, destinées à faciliter l'écoulement de l'air.

Le dispositif déflecteur 44 est de préférence formé par moulage d'une matière plastique, la partie profilée 46, les pattes 48 et 50 et les griffes 52 et 54 étant formées d'une seule pièce. Le dispositif déflecteur 44 peut être ainsi adapté facilement sur l'armature 12 puisqu'il suffit de clipser les griffes 52 et 54 sur cette armature. Bien entendu, la partie profilée pourrait être fixée par d'autres moyens d'accrochage sur l'armature 54 ou éventuellement sur le bras d'essuie-glace (non représenté).

L'invention est susceptible de nombreuses variantes de réalisation, notamment en ce qui concerne la forme de la section transversale de la partie profilée, étant entendu que cette section transversale doit être définie par deux courbes évolutives continues comme défini précédemment.

Ainsi, dans une autre forme de réalisation (non représentée), l'une des jonctions des deux courbes présente un point de rebroussement, l'autre jonction a une forme incurvée reliant les deux courbes, une seule des deux courbes présentant un point d'inflexion.

**Revendications**

1. Dispositif déflecteur pour balai d'essuie-glace porté par un bras d'essuie-glace, du type comportant des moyens d'accrochage (52,54) au balai et une partie profilée (46) possédant une face interne (64) tournée vers une surface à essuyer (60) et une face externe opposée (66), lesquelles se rejoignent entre elles le long d'un bord avant (68) et d'un bord arrière (70), ladite partie profilée (46) possèdant une section transversale limitée extérieurement par deux courbes évolutives continues (CI,CE) qui engendrent respectivement lesdites faces internes (64) et externe (66), l'une au moins des deux courbes (CI,CE) présentant un point d'inflexion (II,IE) situé entre les deux jonctions, le bord avant (68) de la partie profilée étant plus proche de la surface à essuyer (60) que son bord arrière (70), caractérisé en ce que les deux courbes (CI,CE) présentent deux jonctions communes (P1,P2) engendrant respectivement lesdits bord avant (68) et arrière (70).

2. Dispositif selon la revendication 1, caractérisé en ce que les jonctions des deux courbes définissent chacune un point de rebroussement (P1,P2) et en ce que chacune des courbes présente un point d'inflexion (II,IE).

3. Dispositif selon la revendication 1, caractérisé en ce que l'une des jonctions des deux courbes présente un point de rebroussement, en ce que l'autre jonction a une forme incurvée reliant les deux courbes, et en ce qu'une seule des deux courbes présente un point d'inflexion.

4. Dispositif selon l'une des revendications 1 à 3, caractérisé en ce que la partie profilée (46) s'étend sur une longueur (L) au moins égale à la moitié de celle du balai (10).

5. Dispositif selon l'une des revendications 1 à 4, caractérisé en ce que la partie profilée (46) a une section constante sur la plus grande partie de sa longueur (L), cette section s'amincissant progressivement en direction des deux extrémités (72,74).

6. Dispositif selon l'une des revendications 1 à 5, caractérisé en ce que la partie profilée (46) comporte au moins une découpe (80) qui la traverse de part en part pour favoriser l'écoulement de l'air.

7. Dispositif selon l'une des revendications 1 à 6, caractérisé en ce que la partie profilée (46) est formée d'une seule pièce avec les moyens d'accrochage (52,54), par exemple par moulage d'une matière plastique.

8. Dispositif selon la revendication 7, caractérisé en ce que les moyens d'accrochage comprennent des pinces (52,54) propres à s'encliqueter de manière amovible sur le balai d'essuie-glace (10).

**Claims**

1. A deflecting device for a screen wiper blade carried by a screen wiper arm, of the type comprising means (52, 54) for attachment to the blade, a profiled portion (46) having an inner face (64) directed towards a surface (60) that is to be swept, and an opposed outer face (66), the inner and outer faces being joined together along a front edge (68) and a rear edge (70), the said profiled portion (46) having a transverse cross section which is bounded externally by two continuous developed curves (CI, CE) which generate the said inner face (64) and outer face (66) respectively, with at least one of the two curves (CI, CE) having a point of inflexion (II, IE) lying between the two junctions, the front edge (68) of the profiled portion being closer to the surface (60) to be swept than its rear edge (70), characterised in that the two curves (CI, CE) have two common junctions (P1, P2) which define the said front edge (68) and rear edge (70) respectively.

2. A device according to Claim 1, characterised in that each of the junctions of the two curves defines a reversal point (P1, P2), and in that each of the curves has a point of inflexion (II, IE).

3. A device according to Claim 1, characterised in that one of the junctions of the two curves has a reversal point, in that the other junction has a curved form joining the two curves together, and in that only one of the two curves has a point of inflexion.

4. A device according to one of Claims 1 to 3, characterised in that the profiled portion (46) extends over a length (L) which is at least equal to one half of that of the blade (10).

5. A device according to one of Claims 1 to 4, characterised in that the profiled portion (46) has a constant cross section over the major part of its length (L), with this cross section becoming progressively thinner towards the two ends (72, 74).

6. A device according to one of Claims 1 to 5, characterised in that the profiled portion (46) includes at least one through opening (80) for improving flow of the air.

7. A device according to one of Claims 1 to 6, characterised in that the profiled portion (46) is formed integrally with the attachment means (52, 54), for example by moulding in a plastics material.

8. A device according to Claim 7, characterised in that the attachment means comprise claws (52, 54) adapted for removable snap-fitting on to the screen wiper blade (10).

**Patentansprüche**

1. Luftleitvorrichtung für ein Scheibenwischerblatt, das an einem Scheibenwischerarm angebracht ist, in der Ausführung mit Einsetzmitteln (52, 54) zum Einsetzen am Scheibenwischerblatt und einem profilierten Teil (46), der eine Innenfläche (64), die zu einer zu wischenden Fläche (60) hin gerichtet ist, und eine entgegengesetzte Außenfläche (66) besitzt, die entlang einer Vorderkante (68) und einer Hinterkante (70) miteinander verbunden sind, wobei der besagte profilierte Teil (46) einen Querschnitt besitzt, der außen durch zwei stetig veränderliche Kurven (CI, CE) begrenzt wird, welche die besagte Innenfläche (64) und Außenfläche (66) erzeugen, wobei mindestens eine der beiden Kurven (CI, CE) einen Wendepunkt (II, IE) aufweist, der zwischen den beiden Übergängen angeordnet ist, und wobei sich die Vorderkante (68) des profilierten Teils näher an der zu wischenden Fläche (60) befindet als seine Hinterkante (70) , **dadurch gekennzeichnet,** daß die beiden Kurven (CI, CE) zwei gemeinsame Übergänge (P1, P2) aufweisen, welche die besagte Vorderkante (68) und Hinterkante (70) erzeugen.

2. Vorrichtung nach Anspruch 1 , **dadurch gekennzeichnet,** daß die Übergänge der beiden Kurven jeweils einen Umkehrpunkt (P1, P2) definieren und daß jede der Kurven einen Wendepunkt (II, IE) aufweist.

3. Vorrichtung nach Anspruch 1, **dadurch gekennzeichnet,** daß einer der Übergänge der beiden Kurven einen Umkehrpunkt aufweist, daß der andere Übergang eine gekrümmte Form zur Verbindung der beiden Kurven hat und daß nur eine der beiden Kurven einen Wendepunkt aufweist.

4. Vorrichtung nach einem der Ansprüche 1 bis 3, **dadurch gekennzeichnet,** daß sich der profilierte Teil (46) auf einer Länge (L) erstreckt, die mindestens gleich der halben Länge des Scheibenwischerblatts (10) ist.

5. Vorrichtung nach einem der Ansprüche 1 bis 4, **dadurch gekennzeichnet,** daß der profilierte Teil (46) einen Querschnitt hat, der auf dem größten Teil seiner Länge (L) konstant ist, wobei sich dieser Querschnitt in Richtung der beiden Enden (72, 74) fortschreitend verringert.

6. Vorrichtung nach einem der Ansprüche 1 bis 5, **dadurch gekennzeichnet,** daß der profilierte Teil (46) mindestens einen Einschnitt (80) umfaßt, der von einer Seite zur anderen durch ihn hindurchgeht, um die Strömung der Luft zu begünstigen.

7. Vorrichtung nach einem der Ansprüche 1 bis 6, **dadurch gekennzeichnet,** daß der profilierte Teil (46) einstückig mit den Einsetzmitteln (52, 54), beispielsweise als ein Kunststoff-Formteil, ausgeführt ist.

8. Vorrichtung nach Anspruch 7 , **dadurch gekennzeichnet,** daß die Einsetzmittel Klemmen (52, 54) umfassen, die abnehmbar an dem Scheibenwischerblatt (10) einrasten können.

FIG.1

FIG.2

FIG.3

FIG.4